# EUROPEAN PATENT APPLICATION

(11) **EP 3 009 925 A1**
(43) Date of publication of application: **20.04.2016**
(21) Application number: 15188582.9
(22) Date of filing: 06.10.2015
(51) Int. Cl.: G06F 3/0484, G06F 3/0486, G06F 3/0488, G06F 3/0481

(54) **FAST AND NATURAL ONE-TOUCH DELETION IN IMAGE EDITING ON MOBILE DEVICES**

(30) Priority: 16.10.2014 US 201414516400
(71) Applicant: Sony Corporation, Tokyo 108-0075 (JP)
(72) Inventor: Ji, Wei, San Jose, CA 95112-4508 (US); Gharavi-Alkhansari, Mohammad, San Jose, CA 95112-4508 (US)
(74) Representative: D Young & Co LLP

(57) **Abstract**

A fast and natural one-touch deletion apparatus and method for simple image editing on touch screen enabled computer devices is presented. The apparatus detects finger (user) contact on an image object and segments the object, preferably highlighting the selection. The user can then slide the image object to a deletion partition, whereupon releasing their finger contact confirms the deletion, and the apparatus triggers a deletion process to remove the object from the image.

## Description

This technology pertains generally but not exclusively to image editing, and more particularly to deletion of objects from an image in response to a touch screen user input.

The traditional image editing requires buttons or special keys to do the copy, paste, or delete operations. On mobile devices, the photo editor usually utilizes buttons (on screen or separate buttons) to cut or delete the part the user already segmented. However, the present methods are not continuous operation methods, as they require the user to perform more than one cursor contact or release to choose the desired function.

Accordingly, a need exists for a rapid and simple deletion mechanism on touch screen equipped electronic devices.

A fast photo editing method is described for deletion of image objects, such as on a portable smart device having a touch screen. One of ordinary skill in the art will appreciate that a touch screen is a combination display screen and touch interface in which the computer processor of the associated electronic device is configured for displaying icons and indicia and registering user contact (e.g., finger contact) with the screen as a form of user interface.

The disclosed editing approach is fast, in that it does not require an additional icon or additional interface steps when the user performs image deletion. The screen area is partitioned in this process for performing an object deletion operation when the object is moved by sliding the user contact point into this partition area. This deletion mechanism provides one-touch image editing that allows the user to both select and delete an object without even a finger release.

The image object that the user wants to delete is kept visible during the deletion operation and an indicator is preferably provided as the target for the object. In at least one embodiment, the touch screen (e.g., of a mobile device), is partitioned into two functional parts in several areas. One part is for regular image editing, another parts is for deletion. Each one of the two parts can be specified with several small areas depending on the application purpose, while the surrounding areas are used as deletion active areas. The deletion indicator is shown when the finger of the user moves (slides) the selected object into a deletion area (partition). The deletion process is triggered when the finger of the user is released (touch up) in the deletion areas. After deletion, the resulting image is finalized without the deleted object.

It will be appreciated that the presented technology is applicable to a wide range of touch screen enabled devices, and is particularly well-suited for use on mobile phones, cameras, and other portable electronic devices that can be utilized for image capture and editing.

Further aspects of the technology will be brought out in the following portions of the specification, wherein the detailed description is for the purpose of fully disclosing preferred embodiments of the technology without placing limitations thereon.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a schematic of an example screen partition utilized according to an embodiment of the disclosed technology.
FIG. 2A through FIG. 2D are schematic examples of additional screen partitions that may be utilized according to one or more embodiments of the disclosed technology.
FIG. 3A through FIG. 3C is an image sequence showing touch screen display in the process of deleting an object according to an embodiment of the disclosed technology.
FIG. 4 is a block diagram of a touch screen enabled electronic device configured for image object deletion according to an embodiment of the disclosed technology.
FIG. 5 is a flow diagram of image object deletion according to an embodiment of the disclosed technology.

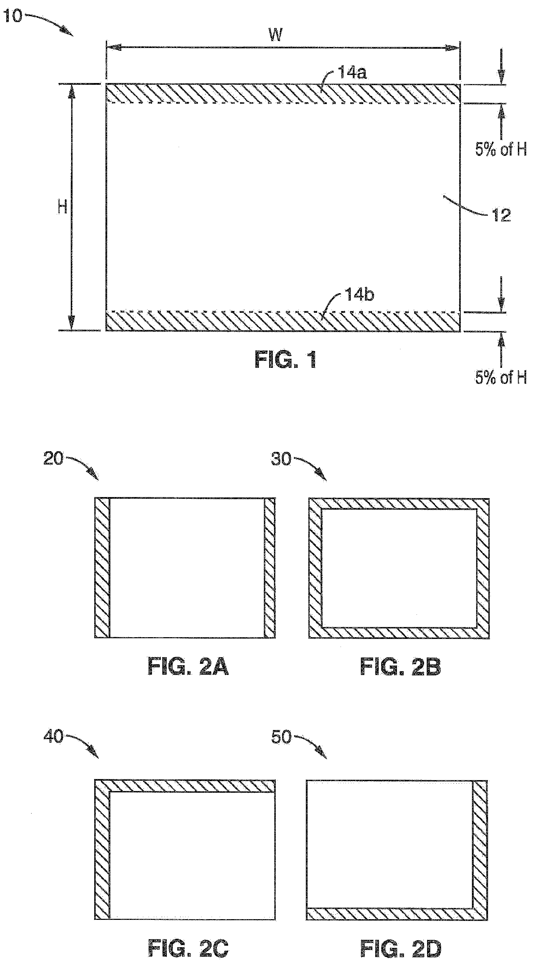

FIG. 1 illustrates an example embodiment 10 of screen partitioning, in which a touch screen is divided into an active area and deletion area. In the example shown, a display screen 12 is seen having a small portion of the top 14a and bottom 14b forming a deletion area. By way of example and not limitation, this could comprise a given percentage (e.g., "t %" and "b %") of the screen in height such as the deletion areas seen in the hashed marking. For example, in one embodiment, these regions comprise the top 5% and bottom 5% of the screen. The remainder of screen 12 comprises the regular image editing area.

FIG. 2A through FIG. 2D illustrate examples of other screen partitioning, exemplified with deletion at both sides 20 in FIG. 2A, around the perimeter 30 in FIG. 2B, on two edges of a first corner 40 in FIG. 2C, and around two edges of a second corner 50 of FIG. 2D. It should be appreciated, however, that the presently described technology is not limited to using these portions of the screen for image deletion, as other areas and combinations can be configured without limitation. For instance, a single side of the screen may be selected, or any desired portion, or portions, of the screen may be partitioned according to the present disclosure as the deletion area. Furthermore, the deletion partition may either be predetermined, or selected by the programming, such as in response to content of the image (e.g., what is contained in its periphery), or the selection point of the image object on the display screen.

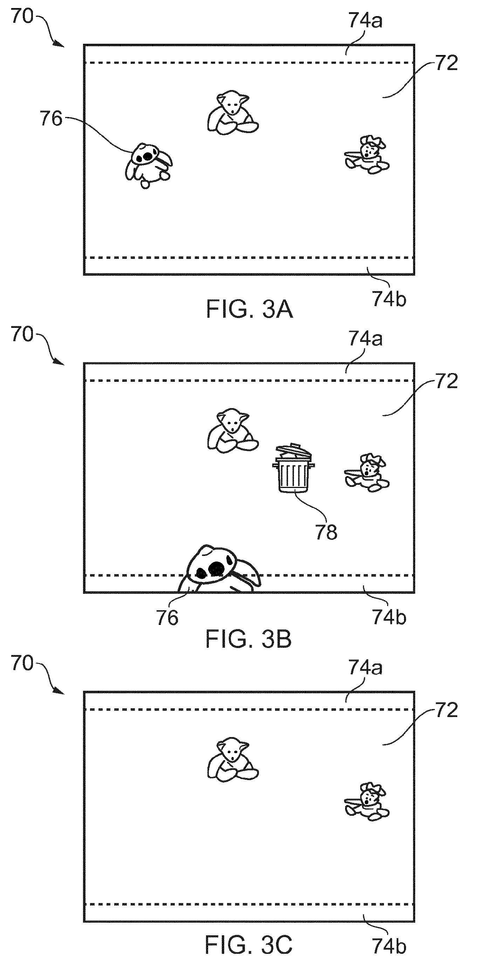

FIG. 3A through FIG. 3C illustrate an example embodiment 70 of performing the image object deletion using the deletion partition paradigm described above. An original image 72 is seen in FIG. 3A with example deletion partitions 74a, 74b. The user desires to delete the image object 76 and touches that object on the screen. In response to the user contact (on touch screen) that image object is selected and segmented ready for editing. In at least one embodiment, the programming will highlight the image object in some manner at this time, indicating to the user which object has been selected. This segmented image object will then move about the screen as the user finger contact is slid across the screen without being released. In FIG. 3B the user has slid image object 76 down into the deletion zone 74b, whereby the system displays a trash can 78 awaiting a deletion confirmation from the user. The user confirms deletion by removing their finger from the screen, and the deletion process is triggered and a final image is created as seen in FIG. 3C that no longer contains image object 76.

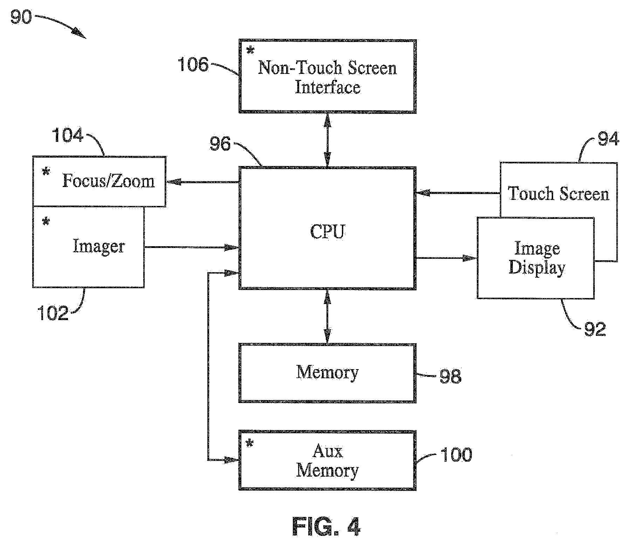

FIG. 4 illustrates a block diagram 90 of a touch screen equipped electronic device (e.g., mobile phone, camera, etc.) upon which the above method may be practiced. An image display 92 and its associated touch screen sensing device 94 are seen in combination in what is typically just called a touch screen. At least one computer processor 96 and associated memory 98 are coupled for controlling the output of display 92 and receiving touch inputs on touch screen sensing device 94. Programming according to the present disclosure is stored in memory 98 for execution on computer 96 to perform this rapid image object deletion process. By way of example and not limitation, other optional elements are shown in the figure, such as an auxiliary memory 100 (e.g., memory card), imaging element 102, focus and/or zoom control 104, and a non-touch screen interface 106. It will be appreciated that a typical image capturing device contains one or more of these optional elements.

The image editing method described in the presented technology can be readily implemented within various touch screen equipped electronic devices, including personal computers, laptops, notebooks, netbooks, tablets, PDAs, mobile phones, cameras, other computer-enabled electronic devices and combinations thereof. It should also be appreciated that the computer may include one or more computer processor devices (e.g., CPU, microprocessor, microcontroller, computer enabled ASIC, etc.) and the associated memory (e.g., RAM, DRAM, NVRAM, FLASH, computer readable media, etc.) is configured for storing programming executable on the processor(s) to perform the steps of the various process methods described herein. The presented technology is non-limiting with regard to memory and computer-readable media, insofar as these are non-transitory, and thus not constituting a transitory electronic signal.

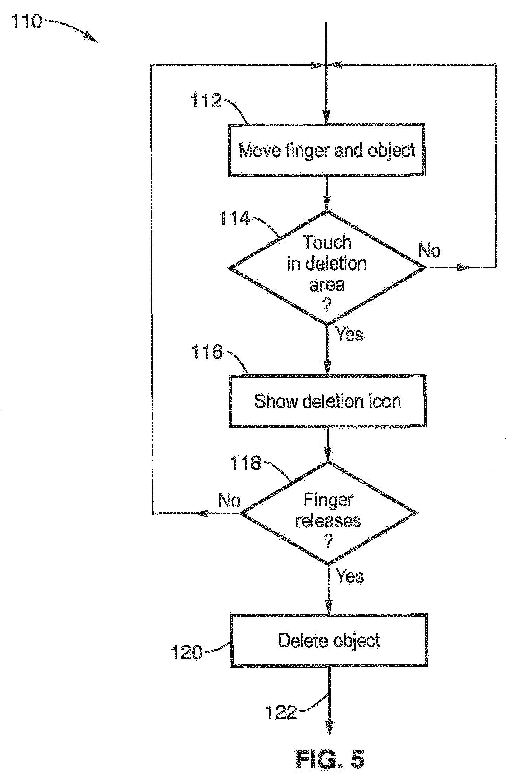

FIG. 5 illustrates an example embodiment 110 of this fast image object deletion method. User selects an image object by touching the image object where it is seen in the touch screen, which is registered by the computer processor at that same location based on inputs received from the touch screen. As the touch contact position moves (slides), the object is moved 112 to follow this contact position. A check is made 114 if the touch contact position has been slid to a deletion partition area of the screen. If the contact is in a deletion area, then a deletion icon is preferably generated 116, otherwise the object is continued to be shown being moved with the point of contact. It should be appreciated that if the user only desires to move the image object, they need only release the image object, by releasing contact, at any locations which are not in the deletion partition; whereupon a move, or alternatively a copy, command can be performed. In the case where the object is slid into the deletion partition area, then a check is made 118 for a contact (finger) release. If contact is released in the deletion partition area, then programming deletes the selected object 120 after which the image is finalized following arrow 122.

In a variation of the above embodiment, the deletion partition need not take up any portion of the image area, thus allowing the user to copy/move the object to any position in the image area. In a simple embodiment, the image may be displayed at close to full screen, while leaving a small percentage of the screen area for the deletion partition area, such as a given percentage along any one or more screen borders. In another variation, a small zoom out is automatically performed prior to movement of the object, whereby the system creates one or more of the deletion areas on screen which are outside of the image area. In this case, the image can be seen in full screen mode, up until the move action is being performed. In still another variation, as the image object is moved and is entering a boundary area, the screen is shifted, (e.g., a given percentage in that direction, such as 5%) opening up an off-image area which contains a deletion icon. Thus, the image can remain at full screen resolution and the deletion partition can be created in a given direction as the image is slid. Thus, the user can drop the item even up to the screen boundary for a simple move, or continue to slide the object into this off-image deletion partition. Combinations of the above approaches can also be performed without departing from the teachings of the presently disclosed technology. It will be appreciated that additional mechanisms can be contemplated for dynamically creating deletion partition areas which do not occupy any of the image area.

Embodiments of the present technology may be described with reference to flowchart illustrations of methods and systems according to embodiments of the technology, and/or algorithms, formulae, or other computational depictions, which may also be implemented as computer program products. In this regard, each block or step of a flowchart, and combinations of blocks (and/or steps) in a flowchart, algorithm, formula, or computational depiction can be implemented by various means, such as hardware, firmware, and/or software including one or more computer program instructions embodied in computer-readable program code logic. As will be appreciated, any such computer program instructions may be loaded onto a computer, including without limitation a general purpose computer or special purpose computer, or other programmable processing apparatus to produce a machine, such that the computer program instructions which execute on the computer or other programmable processing apparatus create means for implementing the functions specified in the block(s) of the flowchart(s).

Accordingly, blocks of the flowcharts, algorithms, formulae, or computational depictions support combinations of means for performing the specified functions, combinations of steps for performing the specified functions, and computer program instructions, such as embodied in computer-readable program code logic means, for performing the specified functions. It will also be understood that each block of the flowchart illustrations, algorithms, formulae, or computational depictions and combinations thereof described herein, can be implemented by special purpose hardware-based computer systems which perform the specified functions or steps, or combinations of special purpose hardware and computer-readable program code logic means.

Furthermore, these computer program instructions, such as embodied in computer-readable program code logic, may also be stored in a computer-readable memory that can direct a computer or other programmable processing apparatus to function in a particular manner, such that the instructions stored in the computer-readable memory produce an article of manufacture including instruction means which implement the function specified in the block(s) of the flowchart(s). The computer program instructions may also be loaded onto a computer or other programmable processing apparatus to cause a series of operational steps to be performed on the computer or other programmable processing apparatus to produce a computer-implemented process such that the instructions which execute on the computer or other programmable processing apparatus provide steps for implementing the functions specified in the block(s) of the flowchart(s), algorithm(s), formula(e), or computational depiction(s).

It will further be appreciated that "programming" as used herein refers to one or more instructions that can be executed by a processor to perform a function as described herein. The programming can be embodied in software, in firmware, or in a combination of software and firmware. The programming can be stored local to the device in non-transitory media, or can be stored remotely such as on a server, or all or a portion of the programming can be stored locally and remotely. Programming stored remotely can be downloaded (pushed) to the device by user initiation, or automatically based on one or more factors. It will further be appreciated that as used herein, that the terms processor, central processing unit (CPU), and computer are used synonymously to denote a device capable of executing the programming and communication with input/output interfaces and/or peripheral devices.

From the description herein, it will be appreciated that that the present disclosure encompasses multiple embodiments which include, but are not limited to, the following:
1. An apparatus for image editing, comprising: (a) a computer processor configured for image editing; (b) a display device and touch screen, both coupled to said computer processor; (c) wherein said touch screen is configured for registering touch contact on said display device for communication to said computer processor; (d) programming executable on the computer processor for performing steps comprising: (d)(i) displaying an original image on said display screen; (d)(ii) registering user contact on said touch screen in selecting an image object seen on said display screen; (d)(iii) segmenting out an image object, displayed in said original image on said display screen, at the location of said user contact with said touch screen; (d)(iv) moving said image object to follow the path of user sliding contact with said touch screen; (d)(v) detecting that user contact movement has reached a deletion partition of said display screen as sensed by said touch screen; (d)(vi) displaying a deletion indicia in response to said user contact reaching said deletion partition as it is moving said image object; and (d)(vii) deleting said image object from the original image and generating a resultant image, in response to detecting that user contact with the touch screen has been removed over the deletion partition of the screen.
2. The apparatus of any preceding embodiment, wherein said image object is highlighted when the image object is selected toward providing feedback to the user of image object selection.
3. The apparatus of any preceding embodiment, wherein said user contact comprises finger contact with said touch screen associated with said display upon which the original image is displayed.
4. The apparatus of any preceding embodiment, wherein said programming executable on the computer processor is configured for associating user contact at any position on said touch screen with that same location on the display screen.
5. The apparatus of any preceding embodiment, wherein said deletion partition of the display screen comprises a portion of the display area.
6. The apparatus of any preceding embodiment, wherein said portion of the display area used as a deletion partition is predefined at one or more boundary areas of the display screen.
7. The apparatus of any preceding embodiment, wherein said deletion partition is predefined at one or more boundary areas of the display screen which overlap the original image area of the screen.
8. The apparatus of any preceding embodiment, wherein said portion of the display area used as a deletion partition is dynamically defined on the display screen when moving said image object.
9. The apparatus of any preceding embodiment, wherein said programming executable on the computer processor is configured for performing said dynamic definition of said deletion partition in response to automatically shrinking or sliding of the original image to open up an area on said display screen for said deletion partition.
10. The apparatus of any preceding embodiment, wherein said deletion indicia comprises an icon displayed on said display screen.
11. The apparatus of any preceding embodiment, wherein said apparatus is selected from the group of processor-enabled electronic devices consisting of personal computers, laptops, notebooks, netbooks, tablets, PDAs, mobile phones, cameras, and combinations thereof.
12. An apparatus for image editing, comprising: (a) a computer processor configured for image editing; (b) a display device and touch screen, both coupled to said computer processor; (c) wherein said touch screen is configured for registering touch contact on said display device for communication to said computer processor; (d) programming executable on the computer processor for performing steps comprising: (d)(i) displaying an original image on said display screen; (d)(ii) registering user contact on said touch screen in selecting an image object seen on said display screen; (d)(iii) segmenting out an image object, displayed in said original image on said display screen, at the location of said user contact with said touch screen; (d)(iv) moving said image object to follow the path of user sliding contact with said touch screen; (d)(v) detecting that user contact movement has reached a deletion partition of said display screen as sensed by said touch screen; (d)(vi) wherein said deletion partition of the display screen comprises a portion of the display area defined in a predefined location or dynamically defined; (d)(vii) displaying a deletion indicia in response to said user contact reaching said deletion partition as it is moving said image object; and (d)(viii) deleting said image object from the original image and generating a resultant image, in response to detecting that user contact with the touch screen has been removed over the deletion partition of the screen.
13. The apparatus of any preceding embodiment, wherein said image object is highlighted when the image object is selected toward providing feedback to the user of image object selection.
14. The apparatus of any preceding embodiment, wherein said programming executable on the computer processor is configured for associating user contact at any position on said touch screen with that same location on the display screen.
15. The apparatus of any preceding embodiment, wherein said portion of the display area used as a deletion partition is predefined at one or more boundary areas of the display screen.
16. The apparatus of any preceding embodiment, wherein said boundary areas of the display screen comprising said deletion partition overlap the original image area of the screen.
17. The apparatus of any preceding embodiment, wherein said portion of the display area used as a deletion partition is dynamically defined on the display screen when moving said image object.
18. The apparatus of any preceding embodiment, wherein said programming executable on the computer processor is configured for performing said dynamic definition of said deletion partition in response to automatically shrinking or sliding of the original image to open up an area on said display screen for said deletion partition.
19. The apparatus of any preceding embodiment, wherein said apparatus is selected from the group of processor-enabled electronic devices consisting of personal computers, laptops, notebooks, netbooks, tablets, PDAs, mobile phones, cameras, and combinations thereof.
20. A method of image editing, comprising: (a) displaying an original image on a display screen coupled with a touch screen of an electronic device configured for registering touch contact by a computer processor executing image editing programming; (b) registering user contact on said touch screen in selecting an image object seen on said display screen; (c) segmenting out an image object, displayed in said original image on said display screen, at the location of said user contact with said touch screen; (d) moving said image object to follow the path of user sliding contact with said touch screen; (e) detecting that user contact movement has reached a deletion partition of said display screen as sensed by said touch screen; (f) displaying a deletion indicia in response to said user contact reaching said deletion partition as it is moving said image object; and (g) deleting said image object from the original image and generating a resultant image, in response to detecting that user contact with the touch screen has been removed over the deletion partition of the screen.

Although the description herein contains many details, these should not be construed as limiting the scope of the disclosure but as merely providing illustrations of some of the presently preferred embodiments. Therefore, it will be appreciated that the scope of the disclosure fully encompasses other embodiments which may become obvious to those skilled in the art.

In the claims, reference to an element in the singular is not intended to mean "one and only one" unless explicitly so stated, but rather "one or more." All structural and functional equivalents to the elements of the disclosed embodiments that are known to those of ordinary skill in the art are expressly incorporated herein by reference and are intended to be encompassed by the present claims. Furthermore, no element, component, or method step in the present disclosure is intended to be dedicated to the public regardless of whether the element, component, or method step is explicitly recited in the claims. No claim element herein is to be construed as a "means plus function" element unless the element is expressly recited using the phrase "means for". No claim element herein is to be construed as a "step plus function" element unless the element is expressly recited using the phrase "step for".

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An apparatus for image editing, comprising:
(a) a computer processor configured for image editing;
(b) a display device and touch screen, both coupled to said computer processor;
(c) wherein said touch screen is configured for registering touch contact on said display device for communication to said computer processor;
(d) programming executable on the computer processor for performing steps comprising:
(i) displaying an original image on said display screen;
(ii) registering user contact on said touch screen in selecting an image object seen on said display screen;
(iii) segmenting out an image object, displayed in said original image on said display screen, at the location of said user contact with said touch screen;
(iv) moving said image object to follow the path of user sliding contact with said touch screen;
(v) detecting that user contact movement has reached a deletion partition of said display screen as sensed by said touch screen;
(vi) displaying a deletion indicia in response to said user contact reaching said deletion partition as it is moving said image object; and
(vii) deleting said image object from the original image and generating a resultant image, in response to detecting that user contact with the touch screen has been removed over the deletion partition of the screen.

2. The apparatus recited in claim 1, wherein said image object is highlighted when the image object is selected toward providing feedback to the user of image object selection.

3. The apparatus recited in claim 1, wherein said user contact comprises finger contact with said touch screen associated with said display upon which the original image is displayed.

4. The apparatus recited in claim 1, wherein said programming executable on the computer processor is configured for associating user contact at any position on said touch screen with that same location on the display screen.

5. The apparatus recited in claim 1, wherein said deletion partition of the display screen comprises a portion of the display area.

6. The apparatus recited in claim 5, wherein said portion of the display area used as a deletion partition is predefined at one or more boundary areas of the display screen.

7. The apparatus recited in claim 6, wherein said deletion partition is predefined at one or more boundary areas of the display screen which overlap the original image area of the screen.

8. The apparatus recited in claim 5, wherein said portion of the display area used as a deletion partition is dynamically defined on the display screen when moving said image object.

9. The apparatus recited in claim 8, wherein said programming executable on the computer processor is configured for performing said dynamic definition of said deletion partition in response to automatically shrinking or sliding of the original image to open up an area on said display screen for said deletion partition.

10. The apparatus recited in claim 1, wherein said deletion indicia comprises an icon displayed on said display screen.

11. The apparatus recited in claim 1, wherein said apparatus is selected from the group of processor-enabled electronic devices consisting of personal computers, laptops, notebooks, netbooks, tablets, PDAs, mobile phones, cameras, and combinations thereof.

12. An apparatus for image editing, comprising:
(a) a computer processor configured for image editing;
(b) a display device and touch screen, both coupled to said computer processor;
(c) wherein said touch screen is configured for registering touch contact on said display device for communication to said computer processor;
(d) programming executable on the computer processor for performing steps comprising:
(i) displaying an original image on said display screen;
(ii) registering user contact on said touch screen in selecting an image object seen on said display screen;
(iii) segmenting out an image object, displayed in said original image on said display screen, at the location of said user contact with said touch screen;
(iv) moving said image object to follow the path of user sliding contact with said touch screen;
(v) detecting that user contact movement has reached a deletion partition of said display screen as sensed by said touch screen;
(vi) wherein said deletion partition of the display screen comprises a portion of the display area defined in a predefined location or dynamically defined;
(vii) displaying a deletion indicia in response to said user contact reaching said deletion partition as it is moving said image object; and
(viii) deleting said image object from the original image and generating a resultant image, in response to detecting that user contact with the touch screen has been removed over the deletion partition of the screen.

13. The apparatus recited in claim 12, wherein said image object is highlighted when the image object is selected toward providing feedback to the user of image object selection.

14. The apparatus recited in claim 12, wherein said programming executable on the computer processor is configured for associating user contact at any position on said touch screen with that same location on the display screen.

15. The apparatus recited in claim 12, wherein said portion of the display area used as a deletion partition is predefined at one or more boundary areas of the display screen.
